# DEMANDE DE BREVET EUROPEEN

(11) **EP 4 148 970 A1**
(43) Date de publication de la demande: **15.03.2023**
(21) Numéro de dépôt: 22194011.7
(22) Date de dépôt: 06.09.2022
(51) Int. Cl.: H02M 7/5388

(54) **CONVERTISSEUR DE TENSION**

(30) Priorité: 08.09.2021 FR 2109385
(71) Demandeur: STMicroelectronics (Tours) SAS, 37100 Tours (FR)
(72) Inventeur: HAGUE, Yannick, 37390 METTRAY (FR); LAUNOIS, Romain, 37000 TOURS (FR)
(74) Mandataire: Cabinet Beaumont

(57) **Abrégé**

La présente description concerne un convertisseur de tension comprenant des premier et deuxième transistors reliés entre des premier et deuxième noeuds, des premier et deuxième thyristors reliés entre les premier et deuxième noeuds, dans lequel :
- dans des premières périodes, le premier transistor et le deuxième thyristor sont passants et le deuxième transistor et le premier thyristor sont bloqués, et
- dans des deuxièmes périodes, le premier transistor et le deuxième thyristor sont bloqués et le deuxième transistor et le premier thyristor sont passants,
certaines premières périodes étant suivies d'une troisième période dans laquelle les premier, deuxième transistors et le deuxième thyristor sont bloqués et un courant est injecté dans la gâchette du premier thyristor, certaines deuxièmes périodes étant suivies d'une quatrième période dans laquelle les premier, deuxième transistors et le premier thyristor sont bloqués et un courant est injecté dans la gâchette du deuxième thyristor.

## Description

### Domaine technique

La présente description concerne de façon générale les dispositifs électroniques, et plus particulièrement les convertisseurs de tension. Plus précisément, la présente description concerne les convertisseurs de tension alternative/continue (AC/DC) et leurs procédés de commande.

### Technique antérieure

Les convertisseurs de tension peuvent être de plusieurs types.

Un redresseur, également appelé convertisseur alternatif/continu ou pont de Graetz, est un convertisseur destiné à alimenter une charge qui nécessite de l'être par une tension et un courant tous deux les plus continus possibles, à partir d'une source de tension alternative. L'alimentation est, la plupart du temps, un générateur de tension.

Un onduleur est un dispositif d'électronique de puissance permettant de générer des tensions et des courants alternatifs à partir d'une source d'énergie électrique de tension ou de fréquence différente.

### Résumé de l'invention

Un mode de réalisation pallie tout ou partie des inconvénients des convertisseurs de tension connus.

Un mode de réalisation prévoit un convertisseur de tension comprenant des premier et deuxième transistors reliés en série entre des premier et deuxième noeuds, et des premier et deuxième thyristors reliés en série entre les premier et deuxième noeuds, le convertisseur étant configuré pour que :
- dans des premières périodes de, le premier transistor et le deuxième thyristor soient passants et que le deuxième transistor et le premier thyristor soient bloqués, et que
- dans des deuxièmes périodes, le premier transistor et le deuxième thyristor soient bloqués et que le deuxième transistor et le premier thyristor soient passants,
   au moins certaines premières périodes étant suivies d'une troisième période dans laquelle les premier et deuxième transistors sont bloqués, le deuxième thyristor est bloqué et un courant est injecté dans la gâchette du premier thyristor, chaque deuxième période étant suivie d'une quatrième période dans laquelle les premier et deuxième transistors sont bloqués, le premier thyristor est bloqué et un courant étant injecté dans la gâchette du deuxième thyristor.

Un autre mode de réalisation prévoit un procédé de commande d'un convertisseur de tension comprenant des premier et deuxième transistors reliés en série entre des premier et deuxième noeuds, et des premier et deuxième thyristors reliés en série entre les premier et deuxième noeuds, le procédé comprenant :
- des premières périodes dans lesquelles le premier transistor et le deuxième thyristor sont passants et le deuxième transistor et le premier thyristor sont bloqués, et
- des deuxièmes périodes dans lesquelles le premier transistor et le deuxième thyristor sont passants et que le deuxième transistor et le premier thyristor sont bloqués,
   au moins certaines premières périodes étant suivies d'une troisième période dans laquelle les premier et deuxième transistors sont bloqués, le deuxième thyristor est bloqué et un courant est injecté dans la gâchette du premier thyristor, chaque deuxième période étant suivie d'une quatrième période dans laquelle les premier et deuxième transistors sont bloqués, le premier thyristor est bloqué et un courant étant injecté dans la gâchette du deuxième thyristor.

Selon un mode de réalisation, le convertisseur est configuré pour que le courant injecté dans la gâchette du premier thyristor, dans la troisième période, et dans la gâchette du deuxième thyristor, dans la quatrième période, est compris entre 20 mA et 200 mA.

Selon un mode de réalisation, la cathode du premier thyristor est reliée au premier noeud et l'anode du premier thyristor est reliée à un troisième noeud et dans lequel la cathode du deuxième thyristor est reliée au troisième noeud et l'anode du deuxième thyristor est reliée au deuxième noeud.

Selon un mode de réalisation, une borne de conduction du premier transistor est reliée au premier noeud, une autre borne de conduction du premier transistor est reliée à un quatrième noeud, une borne de conduction du deuxième transistor est reliée au quatrième noeud et une autre borne de conduction du deuxième transistor est reliée au deuxième noeud.

Selon un mode de réalisation, le convertisseur comprend une inductance reliée entre le quatrième noeud et un cinquième noeud.

Selon un mode de réalisation, le convertisseur comprend des troisième et quatrième thyristors reliés en série entre le premier et deuxième noeud.

Selon un mode de réalisation, la cathode du troisième thyristor est reliée au troisième noeud et l'anode du troisième thyristor est reliée au premier noeud et dans lequel la cathode du quatrième thyristor est reliée au deuxième noeud et l'anode du quatrième thyristor est reliée au troisième noeud.

Selon un mode de réalisation, le convertisseur est configuré pour que :
- dans des cinquièmes périodes, le deuxième transistor et le troisième thyristor soient passants, le premier transistor et les premier, deuxième et quatrième thyristors soient bloqués, et que
- dans des sixièmes périodes, le premier transistor et le quatrième thyristor soient passants, le deuxième transistor et les premier, deuxième et troisième thyristors soient bloqués.

Selon un mode de réalisation, le convertisseur est configuré pour que au moins certaines cinquièmes périodes soient suivies d'une quatrième période et que au moins certaines sixièmes périodes soient suivies d'une troisième période.

Selon un mode de réalisation, le convertisseur est configuré pour qu'une tension alternative soit appliquée entre le troisième noeud et le cinquième noeud.

Selon un mode de réalisation, le convertisseur est configuré pour qu'une tension continue soit appliquée entre les premier et deuxième noeuds.

Selon un mode de réalisation, le convertisseur comprend un condensateur relié entre les premier et deuxième noeuds.

Selon un mode de réalisation, les premier et deuxième transistors sont des transistors MOSFET.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un convertisseur de tension AC/DC ;
la figure 2 représente schématiquement deux étapes d'un procédé de commande du mode de réalisation de la figure 1 ;
la figure 3 représente schématiquement deux autres étapes d'un procédé de commande du mode de réalisation de la figure 1 ; et
la figure 4 représente un autre mode de réalisation d'un convertisseur de tension.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

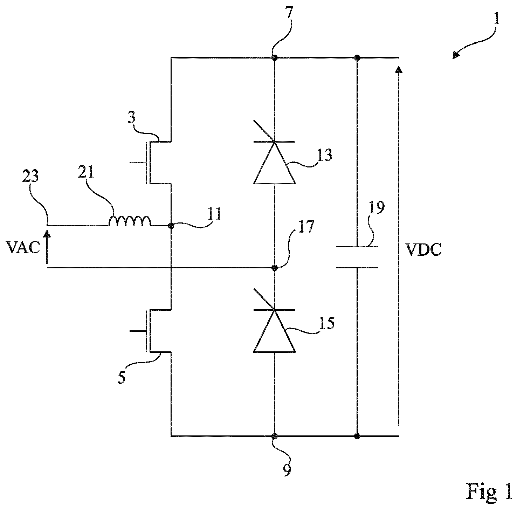

La figure 1 représente un mode de réalisation d'un convertisseur 1, ou circuit convertisseur, de tension alternatif (AC)/continu (DC). Le circuit 1 est par exemple un circuit unidirectionnel, par exemple un redresseur. Le circuit 1 est par exemple un circuit correcteur de facteur de puissance (Power Factor Corrector - PFC). Le circuit 1 est par exemple un circuit correcteur de facteur de puissance de type "totem pole". Le circuit 1 est configuré pour recevoir une tension alternative VAC en entrée et fournir une tension continue VDC en sortie.

Le circuit 1 comprend deux transistors 3 et 5. Les transistors 3 et 5 sont par exemple des transistors à effet de champ à grille isolée (MOSFET), par exemple un MOSFET de type N. De préférence, les transistors 3 et 5 sont adaptés à fonctionner à une fréquence élevée, c'est-à-dire supérieure à 10 kHz. Les transistors 3 et 5 sont reliés en série entre un noeud 7 et un noeud 9. Plus précisément, le transistor 3 est relié entre le noeud 7 et un noeud 11 par ses bornes de conduction et le transistor 5 est relié entre le noeud 11 et le noeud 9 par ses bornes de conduction. Le noeud 11 forme ainsi un noeud, ou point, milieu des transistors 3 et 5. Autrement dit, une borne de conduction du transistor 3, par exemple le drain, est reliée, de préférence connectée, au noeud 7 et une autre borne de conduction du transistor 3, par exemple la source, est reliée, de préférence connectée, au noeud 11. Une borne de conduction du transistor 5, par exemple le drain, est reliée, de préférence connectée, au noeud 11 et une autre borne de conduction du transistor 5, par exemple la source, est reliée, de préférence connectée, au noeud 9. Le noeud 9 est par exemple un noeud d'application d'une tension de référence GND, par exemple la masse.

Les transistors 3 et 5 sont commandés par un ou plusieurs circuits de commande. Ainsi, chaque transistor comprend une borne de commande reliée, de préférence connectée, à un circuit de commande générant une tension de commande du transistor.

Le circuit 1 comprend deux thyristors, ou redresseurs silicium commandés (SCR - Silicon Controlled Rectifier) 13 et 15. Les thyristors 13 et 15 sont reliés en série entre les noeuds 7 et 9. Plus précisément, le thyristor 13 est relié entre le noeud 7 et un noeud 17 et le thyristor 15 est relié entre le noeud 17 et le noeud 9. Le noeud 17 forme ainsi un noeud, ou point, milieu des thyristors 13 et 15. Autrement dit, la cathode du thyristor 13 est reliée, de préférence connectée, au noeud 7 et l'anode du thyristor 13 est reliée, de préférence connectée, au noeud 17. La cathode du thyristor 15 est reliée, de préférence connectée, au noeud 17 et l'anode du thyristor est reliée, de préférence connectée, au noeud 9. La cathode du thyristor 15 est ainsi reliée, de préférence connectée, à l'anode du thyristor 13.

Les thyristors 13 et 15 sont commandés par un ou plusieurs circuits de commande. Ainsi, chaque thyristor comprend une borne de commande, ou gâchette, reliée, de préférence connectée, à un circuit de commande générant un courant de commande du thyristor.

Le circuit 1 comprend en outre un condensateur 19 relié entre les bornes 7 et 9. Autrement dit, une borne du condensateur 19 est reliée, de préférence connectée, au noeud 7 et une autre borne du condensateur est reliée, de préférence connectée, au noeud 9.

Le circuit 1 comprend ainsi trois branches reliées en parallèle. Une branche du circuit 1 comprend les transistors 3 et 5 reliés en série. Une autre branche du circuit 1 comprend les thyristors 13 et 15 reliés en série. Une autre branche du circuit 1 comprend le condensateur 19.

Le circuit 1 comprend en outre une inductance 21. L'inductance 21 est reliée entre le noeud 11 et un noeud 23. Autrement dit, une borne de l'inductance 21 est reliée, de préférence connectée, au noeud 11 et l'autre borne de l'inductance 21 est reliée, de préférence connectée, au noeud 23.

La tension alternative VAC est appliquée entre les noeuds 23 et 17. Les noeuds 23 et 17 constituent par exemple des noeuds d'entrée. La tension continue VDC est fournie entre les noeuds 7 et 9. La tension VDC constitue par exemple la tension entre les bornes du condensateur 19. Les noeuds 7 et 9 constituent par exemple les noeuds de sortie du circuit 1.

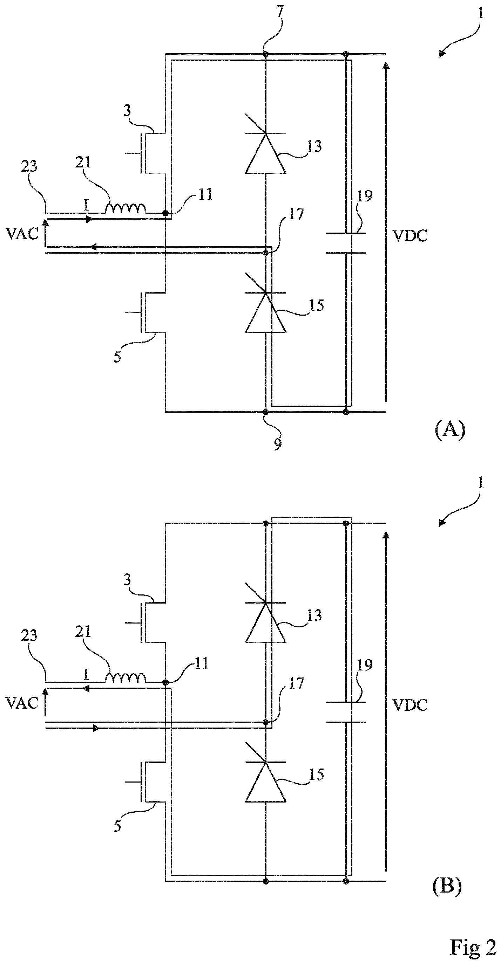

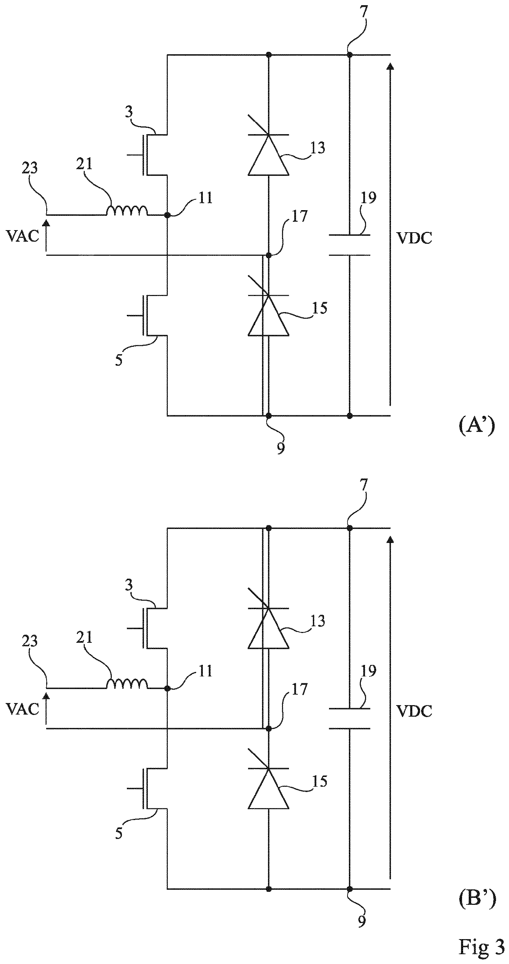

Le fonctionnement du mode de réalisation de la figure 1 est décrit plus en détail en relation avec les figures 2 et 3.

La figure 2 représente schématiquement deux étapes d'un procédé de commande du mode de réalisation de la figure 1. Plus précisément, la figure 2 comprend des vues A et B, chacune représentant une étape du procédé de commande du circuit 1. Les étapes illustrées par les vues A et B, appelées étapes A et B, sont répétées et alternées durant le fonctionnement du circuit 1.

Le trajet du courant est représenté dans les vues A et B par un tracé fléché.

L'étape illustrée par la vue A correspond aux périodes, c'est-à-dire aux durées ou aux intervalles de temps, durant lesquelles la tension VAC est positive. Un courant I traversant l'inductance est positif, c'est-à-dire allant du noeud 23 au noeud 11.

Au cours de l'étape illustrée par la vue A, le transistor 3 est passant et le transistor 5 est bloqué. Le thyristor 13 est bloqué, c'est-à-dire que le courant sur la gâchette du thyristor 13 est a une valeur ne permettant pas au courant de traverser le thyristor 13, par exemple sensiblement nul. Le thyristor 15 est passant, c'est-à-dire que le courant sur sa gâchette est tel qu'un courant peut traverser le thyristor. Par exemple, le courant sur la gâchette du thyristor 15 est supérieur au courant de déclenchement de grille (IGT - gate trigger current), par exemple, de l'ordre de 50 mA. Ainsi, le courant traverse, à partir du noeud 23, l'inductance 21, le transistor 3, le condensateur 19 et le thyristor 15, de manière à atteindre le noeud 17. La tension entre les noeuds 7 et 9 est ainsi positive et le condensateur est chargé pour maintenir la valeur de la tension continue VDC.

L'étape illustrée par la vue B correspond aux périodes durant lesquelles la tension VAC est négative. Le courant I traversant l'inductance est négatif, c'est-à-dire allant du noeud 11 au noeud 23.

Au cours de l'étape illustrée par la vue B, le transistor 5 est passant et le transistor 3 est bloqué. Le courant sur la gâchette du thyristor 13 est par exemple supérieur au courant de déclenchement de grille (IGT - gate trigger current), par exemple, de l'ordre de 50 mA. Ainsi, le courant traverse, à partir du noeud 17, le thyristor 13, le condensateur 19 et le transistor 5 de manière à atteindre le noeud 11 et atteindre le noeud 23 à travers l'inductance 21. La tension entre les noeuds 7 et 9 est ainsi positive et le condensateur est chargé pour maintenir la valeur de la tension continue VDC.

La figure 3 représente schématiquement deux autres étapes d'un procédé de commande du mode de réalisation de la figure 1. Plus précisément, la figure 3 comprend des vues A' et B', chacune représentant une étape du procédé de commande du circuit 1. Plus précisément, une étape illustrée par la vue A', appelée étape A', est effectuée entre les étapes illustrées par les vues B et A et une étape illustrée par la vue B', appelée étape B', est effectuée entre les étapes illustrées par les vues A et B. Ainsi, le procédé de commande du circuit comprend la répétition, dans cet ordre, des étapes A, B', B, et A'.

A la fin de l'étape A et au début de l'étape B', la tension sur le noeud 17 est sensiblement égale à la tension sur le noeud 9, c'est-à-dire la tension de référence, par exemple la masse. La tension aux bornes du thyristor 13 est négative. Autrement dit, la tension sur la cathode du thyristor 13 est supérieure à la tension sur l'anode du thyristor 13.

Au cours de l'étape B', le circuit utilise une caractéristique des thyristors selon laquelle, lorsque la tension aux bornes d'un thyristor est négative, c'est-à-dire lorsque la tension sur la cathode du thyristor est supérieure à la tension sur l'anode du thyristor, et qu'un courant positif est injecté dans la gâchette, le thyristor se comporte comme un transistor bipolaire ayant un faible gain en courant. Le thyristor peut alors faire passer du courant en inverse.

Ainsi, au cours de l'étape B', un courant est injecté dans la gâchette du thyristor 13, qui laisse ainsi passer un faible courant. Le courant injecté est par exemple compris entre 20 mA et 200 mA. Le courant traversant le thyristor 13 est par exemple compris entre 10 mA et 100 mA. La tension sur le noeud 17 augmente ainsi progressivement durant l'étape B'.

Similairement, à la fin de l'étape B et au début de l'étape A', la tension sur le noeud 17 est sensiblement égale à la tension sur le noeud 7, c'est-à-dire la tension VDC. De plus, la tension aux bornes du thyristor 15 est négative. Autrement dit, la tension sur la cathode du thyristor 15 est supérieure à la tension sur l'anode du thyristor 15.

Au cours de l'étape A', un courant positif est injecté dans la gâchette du thyristor 15, qui laisse ainsi passer un faible courant. Le courant injecté est par exemple compris entre 20 mA et 200 mA. Le courant traversant le thyristor 15 est par exemple compris entre 10 mA et 100 mA. La tension sur le noeud 17 diminue ainsi progressivement durant l'étape B'.

Chaque étape A est ainsi suivie, de préférence directement, par une étape B'. Par suivie directement, on entend que ladite étape A et ladite étape B' ne sont pas séparés par une étape B. Chaque étape B est suivie, de préférence directement, par une étape A'. Par suivie directement, on entend que ladite étape B et ladite étape A' ne sont pas séparés par une étape A.

On aurait pu choisir de ne pas effectuer les étapes A' et B'. Cependant, le passage de l'étape A à l'étape B entrainerait un pic de tension sur le noeud 17, ce qui pourrait provoquer des dommages sur les composants électroniques et des perturbations électriques sur le secteur.

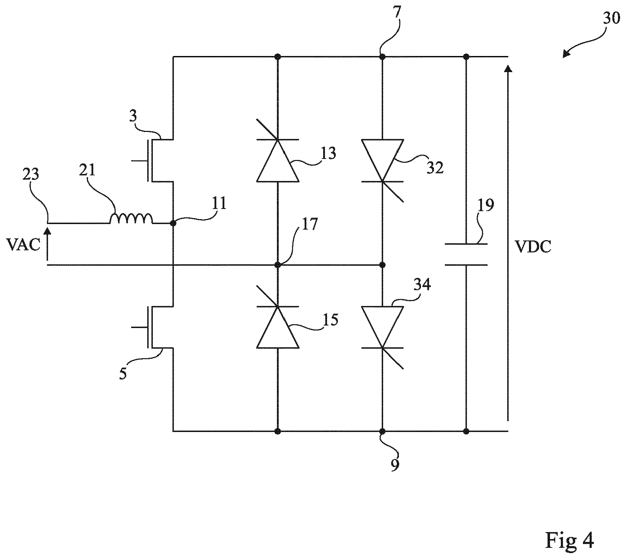

La figure 4 représente un autre mode de réalisation d'un convertisseur de tension 30. Le convertisseur 30 est un convertisseur bidirectionnel. Le circuit 30 est par exemple un circuit correcteur de facteur de puissance (Power Factor Corrector - PFC) bidirectionnel. Le circuit 30 est par exemple un circuit correcteur de facteur de puissance de type "totem pole" bidirectionnel. Autrement dit, le convertisseur 30 est configuré pour convertir la tension alternative en tension continue et la tension continue en tension alternative.

Le convertisseur 30 comprend les éléments du convertisseur 1. Ces éléments, décrits en relation avec la figure 1, ne seront pas décrits de nouveau.

Le convertisseur 30 comprend, en outre, deux thyristors 32 et 34. Les thyristors 32 et 34 sont reliés en série entre les noeuds 7 et 9. Les thyristors 32 et 34 forment ainsi une autre branche entre les noeuds 7 et 9, en parallèle de la branche comprenant le condensateur 19, de la branche comprenant les thyristors 13 et 15, et de la branche comprenant les transistors 3 et 5.

Plus précisément, le thyristor 32 est relié en parallèle du thyristor 13. Le thyristor 32 est relié tête bêche avec le thyristor 13. Autrement dit, l'anode du thyristor 32 est reliée, de préférence connectée, au noeud 7 et la cathode du thyristor 32 est reliée, de préférence connectée, au noeud 17.

Similairement, le thyristor 34 est relié en parallèle du thyristor 15. Le thyristor 34 est relié tête bêche avec le thyristor 15. Autrement dit, l'anode du thyristor 34 est reliée, de préférence connectée, au noeud 17 et la cathode du thyristor 34 est reliée, de préférence connectée, au noeud 9.

Le noeud 17 est ainsi relié, de préférence connecté, à la cathode du thyristor 15, à la cathode du thyristor 32, à l'anode du thyristor 13 et à l'anode du thyristor 34.

Lorsque le circuit 30 fonctionne en mode redresseur, le fonctionnement du circuit 30 est identique au fonctionnement du mode de réalisation de la figure 1 décrit en relation avec les figures 2 et 3. Les thyristors 32 et 34 sont alors bloqués, par exemple en fournissant un courant nul au niveau des gâchettes des thyristors 32 et 34.

Lorsque le circuit 30 fonctionne en mode onduleur, c'est-à-dire lorsqu'une tension continue est convertie en une tension alternative, le procédé de commande du convertisseur 30 comprend une étape C, au cours de laquelle le courant I traversant l'inductance est positif, c'est-à-dire allant du noeud 23 au noeud 11.

Au cours de l'étape C, le transistor 5 est passant et le transistor 3 est bloqué. Le courant sur la gâchette du thyristor 32 est par exemple supérieur au courant de déclenchement de grille (IGT - gate trigger current), par exemple, de l'ordre de 50 mA. Le courant sur la gâchette des thyristors 13, 15, et 34 est par exemple sensiblement nul, ne permettant ainsi pas au courant de traverser les thyristors 13, 15 et 34. Ainsi, le courant traverse, à partir du noeud 7, le thyristor 32, la source de tension alternative VAC, l'inductance 21 et le transistor 5 pour atteindre le noeud 9.

Le procédé de commande comprend aussi une étape D, au cours de laquelle le courant I traversant l'inductance est négatif, c'est-à-dire allant du noeud 11 au noeud 23.

Au cours de l'étape D, le transistor 3 est passant et le transistor 5 est bloqué. Le courant sur les gâchettes des thyristors 13, 15 et 32 est par exemple sensiblement nul, ne permettant ainsi pas au courant de traverser les thyristors 13, 15, 32. Le courant sur la gâchette du thyristor 34 est par exemple supérieur au courant de déclenchement de grille (IGT - gate trigger current), par exemple, de l'ordre de 50 mA. Ainsi, le courant traverse, à partir du noeud 7, le transistor 3, l'inductance 21, et le thyristor 34, de manière à atteindre le noeud 9.

A la fin de l'étape C, la tension sur le noeud 17 est sensiblement égale à la tension sur le noeud 7, c'est-à-dire la tension VDC. Comme dans le cas de l'étape B, l'étape C est par exemple suivie d'une étape A', permettant de faire diminuer la tension sur le noeud 17 progressivement et d'éviter un pic de courant.

Similairement, à la fin de l'étape D, la tension sur le noeud 17 est sensiblement égale à la tension sur le noeud 9, c'est-à-dire la tension de référence, par exemple la masse. Comme dans le cas de l'étape A, l'étape D est par exemple suivie d'une étape B', permettant de faire augmenter la tension sur le noeud 17 progressivement et d'éviter un pic de courant.

Selon un mode de réalisation, l'étape C est régulièrement suivie, de préférence directement, par une étape A', par exemple toutes les 10 ms pour une fréquence de 50 Hz. Par suivie directement, on entend que ladite étape C et ladite étape A' ne sont pas séparés par une étape A, B ou D. Similairement, l'étape D est régulièrement suivie, de préférence directement, par une étape B', par exemple toutes les 10 ms pour une fréquence de 50 Hz. Par suivie directement, on entend que ladite étape D et ladite étape B' ne sont pas séparés par une étape A, B ou C. Autrement dit, la fréquence des étapes A' et B' est inférieure à la fréquence des étapes C et D.

Par exemple, pendant une période T, chaque étape C est suivie d'une étape E durant laquelle le transistor 5 est ouvert et où le courant circule depuis le noeud 7, à travers le thyristor 32, la source de tension alternatif VAC, l'inductance 21, et le transistors 3, pour revenir au nœud 7. La période T comprend ainsi plusieurs étape C et E. A la fin de chaque période T, l'étape C est suivie d'une étape A'. La période T est par exemple 10 ms pour une fréquence de 50 Hz.

A titre de variante, les thyristors 32 et 34 peuvent être remplacés par des diodes ou par des transistors, par exemple des transistors MOSFET, des transistors bipolaires ou des transistors IGBT.

Un avantage du mode de réalisation de la figure 4 est qu'il permet d'obtenir un convertisseur bidirectionnel sans l'ajout de circuit d'alimentation isolé par rapport au mode de réalisation de la figure 1. En effet, les thyristors 15 et 32 ont une cathode commune, et peuvent partager le même circuit d'alimentation. De plus, le thyristor 34 a sa cathode reliée, de préférence connectée, au noeud d'application de la tension de référence et n'a donc pas besoin de circuit d'alimentation spécifique.

Un autre avantage des modes de réalisation décrits est que le courant traversant les thyristors durant les étapes A' et B' est dépendant du courant fourni sur la gâchette. Ainsi, il est possible de choisir la vitesse de croissance ou de décroissance de la tension sur le noeud 17. Selon l'application, il est donc possible de choisir un compromis approprié entre les durées des étapes A' et B' et le risque d'un pic de courant pouvant endommager les circuits et pouvant générer du bruit électromagnétique.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Convertisseur de tension (1, 30) comprenant des premier (3) et deuxième (5) transistors reliés en série, via un premier noeud intermédiaire (11), entre des premier (7) et deuxième (9) noeuds, et des premier (13) et deuxième (15) thyristors reliés en série, via un deuxième noeud intermédiaire (17), entre les premier et deuxième noeuds (7, 9), les premier et deuxième noeuds intermédiaires (11, 17) étant configurés pour recevoir une tension alternative (Vac), les premier et deuxième noeuds (7,9) étant configuré pour fournir une tension continue (VDC), le convertisseur comprenant un circuit de commande des premier et deuxième transistors et des premier et deuxième thyristors configuré pour que :
- dans des premières périodes, le premier transistor (3) et le deuxième thyristor (15) soient passants et que le deuxième transistor (5) et le premier thyristor (13) soient bloqués, et que
- dans des deuxièmes périodes, le premier transistor (3) et le deuxième thyristor (15) soient bloqués et que le deuxième transistor (5) et le premier thyristor (13) soient passants,
au moins certaines premières périodes étant suivies d'une troisième période dans laquelle les premier et deuxième transistors (3, 5) sont bloqués, le deuxième thyristor (15) est bloqué et un courant est injecté dans la gâchette du premier thyristor (13), au moins certaines deuxièmes périodes étant suivies d'une quatrième période dans laquelle les premier et deuxième transistors (3, 5) sont bloqués, le premier thyristor (13) est bloqué et un courant est injecté dans la gâchette du deuxième thyristor (15).

2. Procédé de commande d'un convertisseur de tension (1, 30) comprenant des premier (3) et deuxième (5) transistors reliés en série, via un premier noeud intermédiaire (11), entre des premier (7) et deuxième (9) noeuds, et des premier (13) et deuxième (15) thyristors reliés en série, via un deuxième noeud intermédiaire (17), entre les premier et deuxième noeuds (7, 9), les premier et deuxième noeuds intermédiaires (11, 17) étant configurés pour recevoir une tension alternative (Vac), les premier et deuxième noeuds (7,9) étant configuré pour fournir une tension continue (VDC), le convertisseur comprenant un circuit de commande des premier et deuxième transistors et des premier et deuxième thyristors, le procédé comprenant :
- des premières périodes dans lesquelles le premier transistor (3) et le deuxième thyristor (15) sont passants et le deuxième transistor (5) et le premier thyristor (13) sont bloqués, et
- des deuxièmes périodes dans lesquelles le premier transistor (3) et le deuxième thyristor (15) sont passants et que le deuxième transistor (5) et le premier thyristor (13) sont bloqués,
au moins certaines premières périodes étant suivies d'une troisième période dans laquelle les premier et deuxième transistors (3, 5) sont bloqués, le deuxième thyristor (15) est bloqué et un courant est injecté dans la gâchette du premier thyristor (13), au moins certaines deuxièmes périodes étant suivies d'une quatrième période dans laquelle les premier et deuxième transistors (3, 5) sont bloqués, le premier thyristor (13) est bloqué et un courant est injecté dans la gâchette du deuxième thyristor (15).

3. Convertisseur selon la revendication 1 ou procédé selon la revendication 2, dans lequel le convertisseur est configuré pour que le courant injecté dans la gâchette du premier thyristor, dans la troisième période, et dans la gâchette du deuxième thyristor, dans la quatrième période, est compris entre 20 mA et 200 mA.

4. Convertisseur selon la revendication 1 ou 3 ou procédé selon la revendication 2 ou 3, dans lequel la cathode du premier thyristor (13) est reliée au premier noeud (7) et l'anode du premier thyristor (13) est reliée à un troisième noeud (17) et dans lequel la cathode du deuxième thyristor (15) est reliée au troisième noeud (17) et l'anode du deuxième thyristor (15) est reliée au deuxième noeud (9).

5. Convertisseur selon l'une quelconque des revendications 1, 3 ou 4 ou procédé selon l'une quelconque des revendications 2 à 4, dans lequel une borne de conduction du premier transistor (3) est reliée au premier noeud, une autre borne de conduction du premier transistor (3) est reliée à un quatrième noeud (11), une borne de conduction du deuxième transistor (5) est reliée au quatrième noeud (11) et une autre borne de conduction du deuxième transistor (5) est reliée au deuxième noeud (9).

6. Convertisseur ou procédé selon la revendication 5, dans lequel le convertisseur comprend une inductance (21) reliée entre le quatrième noeud (11) et un cinquième noeud (23).

7. Convertisseur selon l'une quelconque des revendications 1 3 à 6 ou procédé selon l'une quelconque des revendications 2 à 6, dans lequel le convertisseur comprend des troisième (32) et quatrième (34) thyristors reliés en série entre le premier et deuxième noeud (7, 9).

8. Convertisseur ou procédé selon la revendication 8, dans lequel la cathode du troisième thyristor (32) est reliée au troisième noeud (17) et l'anode du troisième thyristor (32) est reliée au premier noeud (7) et dans lequel la cathode du quatrième thyristor (34) est reliée au deuxième noeud (9) et l'anode du quatrième thyristor (34) est reliée au troisième noeud (17).

9. Convertisseur ou procédé selon la revendication 7 ou 8, dans lequel le convertisseur est configuré pour que :
- dans des cinquièmes périodes, le deuxième transistor (5) et le troisième thyristor (32) soient passants, le premier transistor (3) et les premier, deuxième et quatrième thyristors soient bloqués, et que
- dans des sixièmes périodes, le premier transistor (3) et le quatrième thyristor (34) soient passants, le deuxième transistor (5) et les premier, deuxième et troisième thyristors soient bloqués.

10. Convertisseur ou procédé selon la revendication 9, dans lequel le convertisseur est configuré pour que au moins certaines cinquièmes périodes soient suivies d'une quatrième période et que au moins certaines sixièmes périodes soient suivies d'une troisième période.

11. Convertisseur ou procédé selon la revendication 6 et selon l'une quelconque des revendications 8 à 10, dans lequel le convertisseur est configuré pour que la tension alternative (VAC) soit appliquée entre le troisième noeud (17) et le cinquième noeud (23).

12. Convertisseur selon l'une quelconque des revendications 1, 3 à 11 ou procédé selon l'une quelconque des revendications 2 à 11, dans lequel le convertisseur comprend un condensateur (19) relié entre les premier et deuxième noeuds (7, 9).

13. Convertisseur selon l'une quelconque des revendications 1, 3 à 12 ou procédé selon l'une quelconque des revendications 2 à 12, dans lequel les premier et deuxième transistors (3, 5) sont des transistors MOSFET.
